# EUROPEAN PATENT APPLICATION

(11) **EP 1 990 462 A2**
(43) Date of publication of application: **12.11.2008**
(21) Application number: 08153375.4
(22) Date of filing: 27.03.2008
(51) Int. Cl.: D06F 39/08

(54) **Tub for drum washing machine and drum washing machine having the same**

(30) Priority: 08.05.2007 KR 20070044410
(71) Applicant: Samsung Electronics Co., Ltd., Suwon-si Gyeonggi-do (KR)
(72) Inventor: Gweon, Tae Sung, Osan-si Gyeonggi-do (KR); Gil, Geun Suk, Daejeon (KR)
(74) Representative: Grünecker, Kinkeldey, Stockmair & Schwanhäusser Anwaltssozietät

(57) **Abstract**

A tub (20) for a drum washing machine, wherein the tub is assembled by connecting parts, separately prepared, to avoid retaining water therein when the tub (20) is drained, and a drum (15) washing machine having the same. The drum washing machine includes a housing (10); a tub assembled by connecting a front tub part (23) and a rear tub part (24), and located in the housing to contain washing water; and a drainage exit (26) formed through a connection portion juxtaposed to the front tub part (23) and the rear tub part (24), for example, a lowermost position of the tub due to a draft angle, thereby causing the washing water in the tub (20) to be completely discharged to the outside when the tub is drained, and thus, preventing the generation of a disagreeable smell and the contamination of laundry.

## Description

### BACKGROUND

### 1. Field

The present invention relates to a tub and a drum washing machine having the same, and more particularly, to a drum washing machine, in which a tub containing washing water is assembled by connecting parts, separately prepared.

### 2. Description of the Related Art

Generally, washing machines are divided into pulsator-type washing machines, which wash laundry by rotating washing water and the laundry using a pulsator rotatably installed on the bottom of the inside of a tub, agitator-type washing machines, which wash laundry by agitating washing water and the laundry using an agitator that protrudes from the central region of the inside of a tub, and drum-type washing machines, which wash laundry by repeatedly lifting and dropping the laundry through the rotation of a drum accommodating the laundry. Recently, the drum type washing machines (hereinafter, referred to as drum washing machines), which have excellent washing power, use a small amount of water, and scarcely damage laundry, are increasingly in demand.

Korean Patent Application No. 10-2002-0063312 (filed December 16, 2002) discloses a tub assembly for a drum washing machine. The drum washing machine includes an outer casing having a cabinet, a cabinet cover, and a base assembly, a drum rotatably installed in the outer casing for accommodating laundry, and a tub assembly provided at the outside of the drum for containing washing water, a water supply device for supplying the washing water, and a drain device for discharging the washing water.

The tub assembly is usually produced by injection molding, and is provided with a water supply hole, which is connected to the water supply device, formed through an upper portion thereof and a drainage exit, which is connected to the drain device, formed through a lower portion thereof. The drain device is provided in the lower region of the front part of the outer casing in consideration of disposition of other elements provided in the lower region of the outer casing, for example, a valve driving motor, a drying heater, and dampers. Therefore, the drainage exit is provided through the front region of the tub assembly so that the drainage exit can be connected to the drain device at a shortest distance.

Further, to miniaturize a mold, the tub assembly is obtained by connecting a front tub and a rear tub, which are separately prepared, using a plurality of screws, thus maintaining a watertight state.

The front and rear tubs are essentially provided with a draft angle so that they are readily removed from the mold in accordance with general characteristics of the injection molding. Accordingly, since the connection portion of the tub assembly, where the front and rear tubs connected, are lower than other portions of the tub assembly, in the case that the drainage exit is formed through the front region of the lower part of the tub assembly, washing water remains on the connection portion when the washing water is drained. The remaining washing water may contaminate laundry, and further cause a disagreeable smell and the propagation of various bacteria.

### SUMMARY

Therefore, one aspect of the invention is to provide a tub for a drum washing machine, which is assembled by connecting parts, separately prepared, so that when the tub is drained, there is no water remaining therein when the tub is drained, and a drum washing machine having the same.

In accordance with one aspect, in an embodiment of the present invention, a drum washing machine comprises a housing; a tub assembled by connecting a front part and a rear part, and provided in the housing to contain washing water; and a drainage exit formed through the tub juxtaposed with a connection portion between the front and rear parts of the tub.

The connection portion may be located at the central region of the tub; and the drainage exit may be extended to the front end of the tub by a drain pipe.

Further, a drain device may be provided in a lower region of the front part of the housing; the drainage exit may be located at a central region of the tub; and the drain device may be connected to the drainage exit by a drain pipe, extended from the drainage exit to the front end of the tub.

The drain pipe may be formed integrally with the tub.

The drainage exit may have a rectangular shape.

In accordance with another aspect, an embodiment of the present invention provides a drum washing machine comprising a housing; a tub located in the housing to contain washing water; and a drainage exit formed through a lowermost position of a bottom of the tub.

The tub may be assembled by connecting a front part and a rear part, which are inclined toward a connection portion.

The lowermost position may be located at the central region of the tub; and the drainage exit may be extended to the front end of the tub by a drain pipe.

The drain pipe may be formed integrally with the tub.

In accordance with another aspect, in an embodiment of the present invention, a drum washing machine comprises a housing; a tub assembled by connecting a front part and a rear part, and located in the housing to contain washing water; and a drainage exit formed through the tub in a horizontal direction.

An inlet of the drainage exit may be provided at the central region of the tub, and an outlet of the drainage exit may be provided at the front end of the tub.

In accordance with another aspect, in an embodiment of the present invention, a tub for a drum washing machine is is located in a housing of the washing machine to contain washing water, and comprises a front part and a rear part, which are connected to be inclined toward a connection portion; and a drainage exit that is juxtaposed with the connection portion.

In accordance with yet another aspect, in an embodiment of the present invention, a tub for a drum washing machine, which is located in a housing of the washing machine to contain washing water, comprises a front part and a rear part, which are connected; and a drainage exit that is located in a horizontal direction.

Additional aspects and/or advantages will be set forth in part in the description which follows and, in part, will be apparent from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a schematic perspective view of a drum washing machine in accordance with an embodiment of the present invention;
FIG. 2 is a schematic perspective view of a tub of the drum washing machine in accordance with an embodiment of the present invention; and
FIG. 3 is a schematic sectional view of the tub of the drum washing machine in accordance with an embodiment of the present invention.

### DETAILED DESCRIPTION OF THE EMBODIMENTS

Reference will now be made in detail to embodiments of the present invention, examples of which are illustrated in the accompanying drawings, wherein like reference numerals refer to like elements throughout. The embodiments are described below to explain the present invention by referring to the annexed drawings.

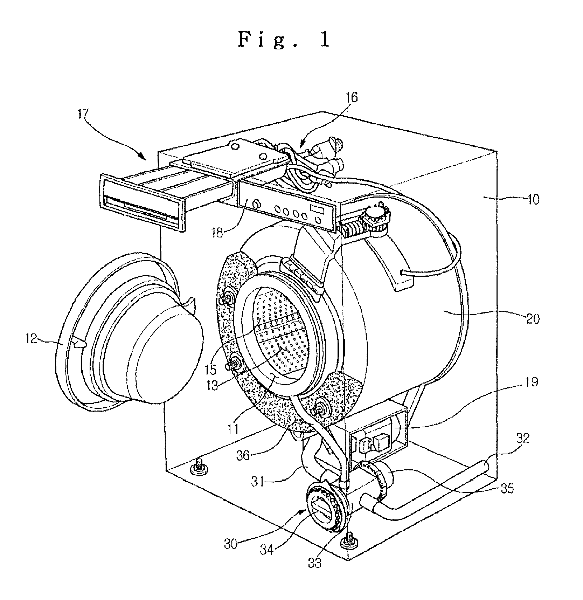

FIG. 1 is a schematic perspective view of a drum washing machine in accordance with an embodiment of the present invention. With reference to FIG. 1, an embodiment of a drum washing machine of the present invention includes a housing 10 forming an external appearance of the washing machine, a door 12 to open and close a laundry inlet 11 formed through a front surface of the housing 10, a tub 20 installed in the housing 10 and having a washing chamber 13 to accommodate laundry, a drum 15 rotatably installed in the tub 20, a water supply device 16 to supply washing water to the washing chamber 13, and a drain device 30 to discharge the washing water from the washing chamber 13 to the outside of the housing 10.

A detergent supply device 17 connected to the water supply device 16 to supply a detergent and a fabric rinse, and a control panel 18 to be manipulated by a user are installed on an upper portion of the housing 10.

A motor 19 rotating the drum 15 in a regular and/or opposite direction(s) so that washing, rinsing, or a dehydrating operation is performed is installed in a lower portion of the housing 10.

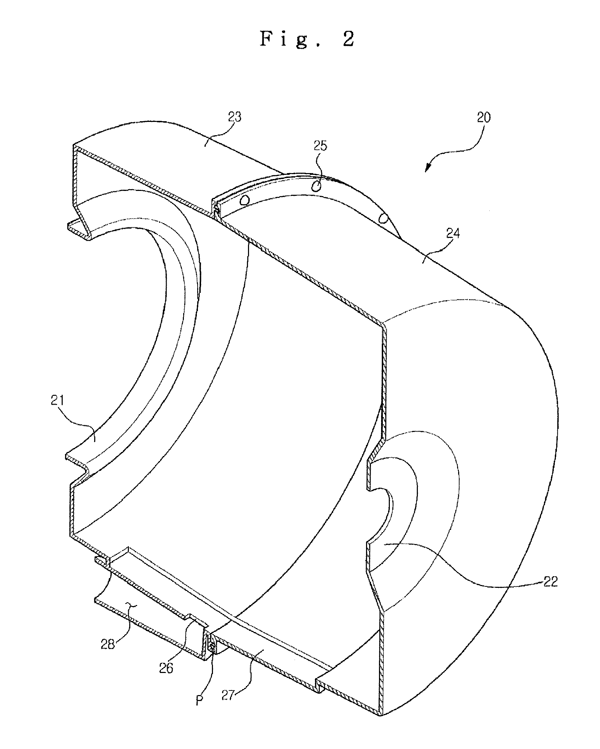

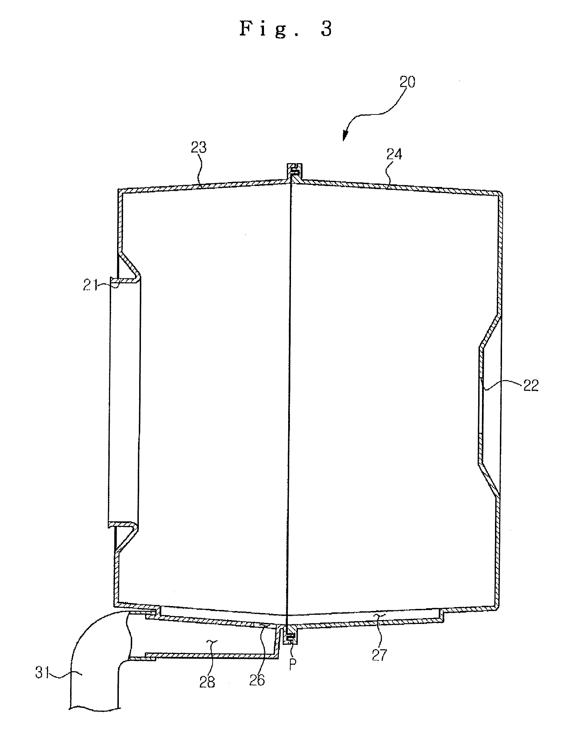

The tub 20 is installed in the housing 10 in the horizontal direction. That is, the tub 20, as shown in FIGs. 2 and 3, has an opening 21 formed through the front portion thereof and connected to the laundry inlet 11 so that a user can put laundry into, and take laundry out of, the tub 20 therethrough, and a rotary shaft hole 22, formed through the rear portion thereof, through which a rotary shaft (not shown) connected to the motor 19 passes, to rotate the drum 15 installed in the tub 20.

The tub 20 is assembled by connecting a front part 23 provided with the opening 21, and a rear part 24 provided with the rotary shaft hole 22. The front and rear parts 23 and 24, which are plastic injection molded products, are connected by a plurality of connecting members 25. The connecting members 25 may be properly modified or amended so that water does not leak out through a connection portion of the tub 20 assembled by connecting the front and rear parts 23 by the connecting members 25.

The front and rear parts 23 and 24, which are produced by injection molding, are essentially provided with a draft angle, at which the front and rear parts 23 and 24 are inclined towards a connection portion (P) between the front and rear parts 23 and 24. Accordingly, a drainage exit (i.e., aperture) 26 is provided through the bottom of the tub 20 juxtaposed with the connection portion (P), for example, through a lowermost position of the bottom of the tub 20, thus preventing washing water from remaining in the tub 20.

A water collection guide 27 is provided on the bottom of the tub 20 so that washing water can be stably collected into the drainage exit 26, and the inlet of the drainage exit 26 has a rectangular shape. The rectangular inlet of the drainage exit 26 has a comparatively large area, thus effectively discharging the washing water and detergent bubbles to the outside of the tub 20.

In the case the connection portion (P) is located at the central region of the tub 20, as shown in FIGs. 2 and 3, the drainage exit 26 is extended to one end of the tub 20 (at the side of the door 12) through a drain pipe 28, which is formed integrally with the front part 23 of the tub 20. The reason why the drain pipe 28 is installed on the tub 20 is that the drain device 30 is provided in the lower region of the front part of the housing 10, in consideration of the disposition of other elements provided in the lower region of the housing 10, for example a valve driving motor, a drying heater, and dampers, and to allow a user to frequently and easily attach and detach a foreign substance filter in the drain device 30, which will be described later, to filter water flowing through the drain device 30.

When the drainage exit 26 is extended to the front end of the tub 20 through the drain pipe 28, the drum washing machine of an embodiment of the present invention uses drain elements, which are employed by conventional drum washing machines, thus cutting down on expenses due to compatibility.

Further, in the case that the drainage exit 26 including the drain pipe 28 is horizontally installed on the front part 23 of the tub 20, when the front part 23 is separated from a mold, the front part 23 may be taken out of the mold at once without any separate process.

The drain device 30 includes an internal drain hose 31 connected to the drain pipe 28 of the tub 20, an external drain hose 32 to guide washing water, that flows to the drain device 30, to the outside of the housing 10, a drain case 33 provided with a filter chamber and a pump chamber formed therein, a filter member 34 installed in the filter chamber, and a drain pump 35 installed in the pump chamber. The filter member 34 can be detachably attached to the filter chamber from the front part of the housing 10. Reference numeral 36 indicates an intermediate connection hose 36, which serves to discharge washing water that overflows the laundry inlet 11 during a washing operation, to the drain case 33 and to discharge air, supplied to the drain case 33 together with the washing water, to the outside.

Hereinafter, a draining operation of the above drum washing machine will be described.

When a draining operation is started after a washing or rinsing operation is completed, a drain valve (not shown) provided between the tub 20 and the internal drain hose 31 is opened, and the drain pump 35 is operated. Then, the washing water in the washing chamber 13 is transferred to the drain case 33 along the internal drain hose 31, and the washing water transferred along the internal drain hose is supplied to the filter chamber of the drain case 33, and is thus filtered by the filter member 34. The filtered washing water is supplied to the pump chamber connected to the filter chamber, and is thus discharged to the outside of the housing 10 through the external drain hose 32.

Although this embodiment illustrates the drainage exit 26 and the drain pipe 28, which are formed on the front part 23 of the tub 20, the present invention is not limited thereto. That is, for example, the drainage exit 26 and the drain pipe 28 may be formed on the rear part 24 of the tub 20.

As is apparent from the above description, the present invention provides a drum washing machine, in which a drainage exit is formed through a connection portion of a tub assembled by connecting front and rear parts, separately prepared, for example, the lowermost position of the bottom of the tub, thereby causing the washing water in the tub to be completely discharged to the outside when the tub is drained, and thus preventing the generation of a disagreeable smell and the contamination of laundry.

Further, since the drainage exit located at the central region of the tub is extended to the front end of the tub through a drain pipe, formed integrally with the tub by injection molding, in the case that a drain device is provided in the lower region of the front part of a housing in the same manner as conventional washing machines, the drainage exit is easily connected to the drain device. Thereby, the drum washing machine has effective compatibility.

Although a few embodiments of the invention have been shown and described, it would be appreciated by those skilled in the art that changes may be made in this embodiment without departing from the principles and spirit of the invention, the scope of which is defined in the claims and their equivalents.

## Claims

1. A drum washing machine comprising:
a housing;
a tub having a front part and a rear part of the tub, and located in the housing to contain washing water; and
a drainage exit formed through the tub juxtaposed with a connection portion between the front and rear parts of the tub.

2. The drum washing machine according to claim 1, wherein:
the connection portion is located at a central region of the tub; and
the drainage exit is extended to an end of the tub by a drain pipe.

3. The drum washing machine according to claim 1, wherein:
a drain device is located in a lower region of a front part of the housing;
the drainage exit is located at a central region of the tub; and
the drain device is connected to the drainage exit by a drain pipe, extended from the drainage exit to a front end of the tub.

4. The drum washing machine according to claim 2, wherein the drain pipe is formed integrally with the tub.

5. The drum washing machine according to claim 1, wherein the drainage exit has a rectangular shape.

6. A drum washing machine comprising:
a housing;
a tub provided in the housing to contain washing water; and
a drainage exit formed through a lowermost portion of a bottom of the tub.

7. The drum washing machine according to claim 6, wherein the tub is assembled by connecting a front part and a rear part, which are inclined toward a connection portion.

8. The drum washing machine according to claim 6, wherein:
a lowermost position is located at a central region of the tub; and
the drainage exit is extended to a front end of the tub by a drain pipe.

9. The drum washing machine according to claim 8, wherein the drain pipe is formed integrally with the tub.

10. A drum washing machine comprising:
a housing;
a tub having a front part coupled to a rear part of the tub, and located in the housing to contain washing water; and
a drainage exit formed through the tub in a horizontal direction.

11. The drum washing machine according to claim 10, wherein an inlet of the drainage exit is located at a central region of the tub, and an outlet of the drainage exit is provided at an end of the tub.

12. The drum washing machine according to claim 11, wherein the inlet of the drainage exit has a rectangular shape.

13. A tub of a drum washing machine, which is located in a housing of the washing machine to contain washing water, comprising:
a front part and a rear part of the tub, connected and inclined toward a connection portion; and
a drainage exit juxtaposed with the connection portion.

14. The tub according to claim 13, wherein:
the connection portion is located at a central region of the tub; and
the drainage exit is extended to an end of the tub by a drain pipe.

15. The tub according to claim 13, wherein:
a drain device is provided in a lower region of a front part of the housing;
the drainage exit is located at a central region of the tub; and
the drain device is connected to the drainage exit by a drain pipe, extended from the drainage exit to a front end of the tub.

16. The tub according to claim 14, wherein the drain pipe is formed integrally with the tub.

17. A tub of a drum washing machine, which is located in a housing of the washing machine to contain washing water, comprising:
a front part and a rear part of the tub, which are connected; and
a drainage exit located in a horizontal direction.

18. The tub according to claim 17, wherein an inlet of the drainage exit is provided at the central region of the tub, and an outlet of the drainage exit is provided at the end of the tub.

19. The tub according to claim 18, wherein the inlet of the drainage exit has a rectangular shape.

20. The drum washing machine according to claim 3, wherein the drain pipe is formed integrally with the tub.

21. The drum washing machine according to claim 7, wherein:
a lowermost position is located at a central region of the tub; and
the drainage exit is extended to a front end of the tub by a drain pipe.

22. The tub according to claim 15, wherein the drain pipe is formed integrally with the tub.
